(19) Europäisches Patentamt / European Patent Office / Office européen des brevets

(11) **EP 3 929 256 B1**

(12) **EUROPEAN PATENT SPECIFICATION**

(45) Date of publication and mention
of the grant of the patent:
**24.01.2024   Bulletin 2024/04**

(21) Application number: **20181391.2**

(22) Date of filing: **22.06.2020**

(51) International Patent Classification (IPC):
*C09D 11/107* (2014.01)    *C08F 290/06* (2006.01)
*C09D 4/06* (2006.01)    *C08G 73/02* (2006.01)
*C09D 11/101* (2014.01)    *C09D 11/037* (2014.01)
*C09D 155/00* (2006.01)    *C08F 222/10* (2006.01)
*C09D 11/30* (2014.01)

(52) Cooperative Patent Classification (CPC):
(C-Sets available)
**C09D 11/101; C08F 290/06; C08G 73/02;
C09D 4/06; C09D 11/037; C09D 11/107;
C09D 155/005**                        (Cont.)

(54) **POLYMERIC AMINO (METH)ACRYLATE**

POLYMERES AMINO(METH)ACRYLAT

AMINO-(MÉTH)ACRYLATE POLYMÉRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.12.2021   Bulletin 2021/52**

(73) Proprietor: **Allnex Belgium, S.A.
1620 Drogenbos (BE)**

(72) Inventors:
• **CAPPELLE, Steven
  9400 Ninove (BE)**
• **DE WAELE, Luc
  9400 Denderwindeke (BE)**

(74) Representative: **Gabriel, Kiroubagaranne et al
Allnex Belgium, S.A.
Patent Department
Anderlechtstraat 33
1620 Drogenbos (BE)**

(56) References cited:
**EP-A1- 3 401 370          WO-A1-2017/095786
US-A1- 2010 048 756**

(52) Cooperative Patent Classification (CPC): (Cont.)

C-Sets
**C08F 290/06, C08F 222/1006, C08F 222/102;**
**C09D 4/06, C08F 290/06**

**Description**

The present invention relates to a polymeric amino acrylate for use in radiation curable compositions. The invention also relates to a process for the preparation of the polymeric amino (meth)acrylate; a radiation curable composition comprising the polymeric amino (meth)acrylate; a method for coating an article of a substrate with such a radiation curable composition and to the use of the polymeric amino (meth)acrylate in coatings and inks. The polymeric amino (meth)acrylate is in particular suitable for lithographic or offset ink applications. The polymeric amino (meth)acrylate can be used as UV synergists in radiation curable compositions. The polymeric amino (meth)acrylates of the invention are suitable for improving curing of coating or inks using standard UV light and/or UV LED light.

UV LED lamps, as compared to traditional mercury arc lamps, are more and more used in graphic ink applications as they are safer, more energy efficient and more environment-friendly. UV LED lamps substantially emit monochromatic light in the UV-A zone of the UV spectrum.

Oxygen inhibition is an age-old problem for coatings that cure via free-radical polymerization. Molecular oxygen can physically quench the triplet state of the photoinitiator/sensitizer, or it can scavenge the free radicals or active radical centers to produce unreactive peroxide radicals. The end results range from reduced coating properties to uncured, liquid surfaces on the coating. This issue is even more pronounced in low-intensity cure processes, such as UV-LED or UVA cure, which frequently result in tacky, uncured surfaces. There are known physical and chemical ways to reduce oxygen inhibition or improve surface cure.

Crosslinking of a UV curable coating or ink can only be effective when there is a good overlap with the absorbance of the photoinitiator species (PI). Only a select set of PIs absorb efficiently in this specific wavelength zone, and they are all aiming at good through curing of the coating.

However, when using there is still a big problem of oxygen inhibition which leads to an incomplete surface cure is more pronounced with.

It is possible to use amine synergists to mitigate oxygen inhibition and help to increase surface reactivity. Amine synergists are used since long in radiation curable compositions because of their synergistic effect induced by the presence of nitrogen atoms that can act as electron donor. These amine synergists can be either aliphatic or aromatic. Amino groups are known to accelerate UV crosslinking by participating in a bimolecular priming mechanism, in the presence of photoinitiators (PI) such as benzophenones. Due to this same system of electron donation they also generate efficient hydrogen donating carbons in alpha position of the nitrogen atom, which at their turn enhance surface cure reactivity upon the formation of fast propagating radical species. Moreover, they act as oxygen scavenger in radiation curable formulations.

Amino synergists that are on the market today have the disadvantage that their use in UV LED curing is limited. Existing materials are proved not to be very suitable for use in inks, for instance because of migrating issues in food packaging or because of their partially water solubility which cause to impede the oil-water balance of an offset ink. This is typically the case for aliphatic amines. Further, known amino synergists often cause yellowing.

Aromatic amine synergists usually show low water solubility and are more suitable for offset ink applications. Frequently used aromatic amine synergists include ethyl 4-N,N-dimethylaminobenzoate (EDB), and 2-ethylhexyl 4-N,N-dimethyl aminobenzoate (EHA). However, these aminobenzoates also have migratable species in the cured coating. Moreover, the toxicology profile of these compounds in not always very positive.

Polymeric aromatic amine synergist having a polyether chain between the aminobenzoate moieties as described in WO 2007/017298 may lead to fewer migratable species. However, though the introduction of a polyether chain may have a deleterious effect on the cured coating properties.

US 2010/0048756 describes the preparation and use of amino acrylates from the reaction of difunctional acrylate monomers and (bireactive) primary amines in improving the adhesion to plastic substrates. Typically, these types of amino acrylate contain a considerable amount of low molecular weight di(meth)acrylate compounds which may migrate from the cured coating or ink.

EP1731541 describes the preparation of amino acrylates from (meth)acrylated ethoxylated/propoxylated polyols with primary and/or secondary amines to produce compounds having a reduced tendency to migrate from cured compositions. EP1731541 teaches that low molecular weight monomers, such as hexanediol diacrylate (HDDA) and trimethylolpropanetriacrylate (TMPTA), should be used at less than 10 percent (w/w) and more preferably less than 5 percent (w/w) of the energycurable composition.

WO06131259 describes low extractable radiation curable compositions containing amino acrylates based on ethoxylated and/or propoxylated tri- or tetra acrylates. The amine content of the amino acrylates described is relatively low, which makes them less suitable for use in low energy curing applications.

WO 2017/095786 A1 describes polymeric aminoacrylates formed by the reaction of polyalkylene glycol diacrylates with bireactive amines.

EP 3 401 370 A1 describes addition products of (1) (meth)acrylated compounds having two or more (meth)acrylic ester groups per molecule reacted with (2) certain amino compounds that are claimed to be highly suited for use as UV synergist in radiation curable compositions.

Therefore, there is a clear need for a new amino (meth)acrylate that overcomes at least some or all of the above drawbacks.

## Detailed description

Inventors have now surprisingly found a compound that overcomes, at least partially, if not completely, the above-mentioned problems by providing polymeric amino (meth)acrylates as described in claim 1. Accordingly, the first aspect of the invention is related to a polymeric amino (meth)acrylate suitable for use in radiation curable compositions, wherein said polymeric amino (meth)acrylate is the reaction

It is surprisingly found that inks comprising these polymeric amino (meth)acrylates provide excellent reactivity when cured with UV, EB or LED light, provide an ink water balance that is comparable with standard aminobenzoates (such as EDB or EHA) and provides inks with improved pigment compatibility compared with standard amino acrylates. Further, the inks comprising the polymeric amino (meth)acrylate have a low odor and are suitable for low migration inks since the ink comprise a lower amount of low molecular weight di- or monofunctional (meth)acrylate monomers. In addition, the polymeric amino (meth)acrylate enables to replace aminobenzoates in offset inks. Further, the inks comprising the polymeric amino (meth)acrylates do not show a significant viscosity increase when stored for a certain period ate elevated temperatures.

In present invention, a bireactive amine (Aii) is an amine having two reactive NH functions. The bireactive amine has two secondary amine groups (-NH), or one primary amine group ($-NH_2$). It is also possible that for making the secondary amine terminated copolymer a mixture of primary amine compounds and compounds having two secondary amine groups are used.

In present invention, with difunctional (meth)acrylate (Ai) is meant a compound comprising two (meth)acrylate groups. The multifunctional (meth)acrylate B is a compound comprising two or more (meth)acrylate groups. Preferably, the multifunctional (meth)acrylate comprises 3 or more, more preferably 4 or more such as 5, 6, 7, 8, 9 or 10 (meth)acrylate groups.

In present invention, the term "(meth)acrylate" is to be understood as to encompass both acrylated and methacrylated compounds or derivatives as well as mixtures thereof. By "(meth)acrylate" is meant more in particular compounds comprising at least one acrylate group (CH2=CHCOO-) and/or at least one methacrylate group (CH2=CCH3COO-). When both acrylate groups and methacrylate groups are present, they can be present on the same or on different compounds. Sometimes it is also referred to the term "(meth)acrylic ester groups", which refers to the presence of acrylic groups, methacrylic groups or a mixture of both.

A second aspect is related to a process for preparing the above described polymeric amino (meth)acrylate comprising the steps of:

(i) reacting at least one di(meth)acrylated compound (Ai) that comprises two (meth)acrylate groups per molecule with at least one bireactive amine (Aii) to form a secondary amine terminated copolymer (A); and
(ii) reacting the secondary amine terminated copolymer (A) with at least one multifunctional (meth)acrylate (B) that contains at least two (meth)acrylic ester groups and which is different from the di(meth)acrylated compound (Ai) to obtain the polymeric amino (meth)acrylate.

A third aspect of the invention is related to radiation curable compositions such as coatings or inks comprising the polymeric amino (meth)acrylate.

A fourth aspect of the invention is related to the use of such radiation curable composition in offset printing

A fifth aspect is related to a substrate coated with such radiation curable composition.

A sixth aspect of the invention is related to a method for coating an article or substrate comprising the steps of

(a) providing a radiation curable composition comprising the polymeric amino (meth)acrylate as described here above,
(b) applying said composition onto a surface, and
(c) irradiating the surface or article with actinic radiation.

Another aspect is related to a method for improving surface curing in coating and inks comprising the steps of

(a) providing a radiation curable composition comprising the polymeric amino (meth)acrylate as described here above,

(b) applying said composition onto a surface, and

(c) irradiating the surface or article with actinic radiation.

In one embodiment according to the above aspects of the invention, the molar ratio of the multifunction (meth)acrylate (B) to the secondary amine terminated copolymer (A) is at least 2:1. The molar ratio of the (meth)acrylate compound (B) to the amino copolymer (A) is preferably no more than 10:1, more preferably no more than 6:1.

Typically, a single type of multifunctional (meth)acrylate compound (B) is reacted with the amine-terminated copolymer (A). It is also possible that a mixture of different types of multifunctional (meth)acrylate compounds are used.

In another embodiment, a molar excess of amine vs (meth)acrylate functions is used to prepare the secondary amine copolymer A. The amount of the di(meth)acrylated compound (Ai) to the bireactive amine compound (Aii) is such that molar ratio of the di(meth)acrylated compound (Ai) relative to the bireactive amine compound (Aii) is less than 1. Preferably the molar ratio of the di(meth)acrylated compound (Ai) relative to the bireactive amine compound (Aii) is from 0.5 to 0.9, more preferably 0.6 to 0.8.

It is possible to use more than one type of the bireactive amine (Aii) and/or more than one type of the difunctional (meth)acrylate (Ai). Preferably, one type of the bireactive amine (Aii) and/or one type of the difunctional (meth)acrylate (Ai) are used in the preparation of the secondary amine copolymer A.

In another embodiment, the weight average molecular weight (Mw) determined by Gel Permeation Chromatography (GPC) of the amine terminated copolymer (A) is at least 250 Dalton, more preferably at least 300 Dalton, even more preferable at least 500 Dalton. The molecular weight is at most 10.000 Dalton, more preferably at most 7.000 Dalton, even more preferable at most 5.000 Dalton, most preferable at most 2.500 Dalton.

Weight average molecular weights (Mw) and number average molecular weights (Mn) typically are measured by GPC, with samples being dissolved in THF, on a $3\times$PLgel 5 $\mu$m Mixed-D LS 300$\times$7.5 mm column MW range 162 to 377400 g/mol calibrated with polystyrenes standards, at 40° C.

The polymeric amino(meth)acrylate of the invention has a high (meth)acrylate functionality. The polymeric amino(meth) acrylate can comprise 2 (meth)acrylate groups. Preferably, the polymeric amino(meth) acrylate comprises 3 or more, more preferably 4 or more, such as 5, 6, 7, 8, 9 or 10 (meth)acrylate groups.

The process for preparing the polymeric amino (meth)acrylate comprises (i) reacting at least one di(meth)acrylated compound (Ai) that comprises two (meth)acrylate groups per molecule with at least one bireactive amine (Aii) to form a secondary amine terminated copolymer (A); and (ii) reacting the secondary amine terminated copolymer (A) with at least one multifunctional (meth)acrylate (B) that contains at least two (meth)acrylic ester groups and which is different from the di(meth)acrylated compound (Ai). The reaction (i) and (ii) are so called Michael addition reactions.

In one embodiment, the reactions (i) and/or (ii) can proceed in the absence of a solvent and/or catalyst. Typically, the reactions can be carried out at a temperature between -30 degrees centigrade to +150 degrees centigrade, the preferred temperature is from 25 degrees centigrade to 100 degrees centigrade. Most preferably, the reactions take place between 30 and 80 degrees centigrade.

The reactions (i) and/or (ii) are preferably carried out in an inert gas atmosphere, for example, under nitrogen or argon. However, this is not necessary for a successful reaction.

In some embodiments, polymerization inhibitors are added to the reaction mixture of reactions (i) and /or (ii). This may help that no undesirable polymerization takes place during the Michael addition reaction. Suitable polymerization inhibitors include known products, such as substituted phenols, such as 2,6-di-tert-butyl-p-cresol, hydroquinones, such as methylhydroquinones, and thio ethers, such as thiodiglycol or phenothiazine. Other polymer stabilizers may also be added during or after the reaction. Typically, aromatic or aliphatic phosphites can be used.

**Difunctional (meth)acrylate (Ai)**

In present invention the difunctional (meth)acrylates (Ai) are "di(meth)acrylates, or (meth)acrylates containing two (meth)acrylic ester groups per molecule.

The difunctional (meth)acrylates (Ai) are typically selected from (meth)acrylic esters (Ai1), polyester(meth)acrylates (Ai2), epoxy (meth)acrylates (Ai3) and/or (poly)urethane (meth)acrylates (Ai4). Such compounds are well known in the art.

(Meth)acrylic esters (Ai1) are esters of (meth)acrylic acid with diols, i.e. with compounds that contain essentially two hydroxyl groups. Examples of suitable (meth)acrylic esters (Ai1) are esters of (meth)acrylic acid with two functional polyols. By "(meth)acrylic acid" is meant acrylic acid, methacrylic acid or a mixture of both. In particular acrylic acid is used in the context of the present invention. By "two functional polyol" is meant a compound containing 2 hydroxyl groups. Often the polyol used is an aliphatic polyol. Cycloaliphatic polyols can be used as well. Examples of suitable aliphatic two-functional polyols are (i) di-hydric alcohols, such as (poly)propylene glycols (like for instance propylene glycol, dipropylene glycol and tripropylene glycol); 1,3-propanediol; (poly)ethylene glycols (like for instance diethylene glycol, triethylene glycol, tetraethylene glycol, polyethylene glycol); neopentylglycol (2,2-dimethyl-1,3-propanediol); 2-methyl-1,3-propanediol (MPD); 2-ethyl-2-butyl-1,3-propanediol; 1-ethyl-2-methyl-1,3-propanediol; 2-ethyl-2-methyl-1,3-propanediol; 1,3-butylene glycol; 1,4-butanediol; 2,3-butanediol; 2-butyl-2-ethyl-1,3 propanediol (BEPD); pentanediol; 2-methyl-2-ethyl-1,3-propane diol; 1,3-pentane diol; 2,2,4-trimethyl-1,3-pentane diol; hexyleneglycol; 1,6-hexanediol; 1,8-octane diol 1,12-dodecanediol; 3-hydroxy-2,2-dimethylpropyl 3-hydroxy-2,2-dimethylpropanoate, hydroxylpivalyl hydroxypivalate (HPHP); the hydroxypivalate of neopentyl glycol) and/or 2,2,4-trimethyl-1,3-pentanediol (TMPD); and lactone or lactide modified forms of these and ethoxylated and/or propoxylated forms of these. Cycloaliphatic polyols are also suitable such as 1,4-cyclohexanediol, 3,5-dimethylcyclohexanol (cis/trans mixture), 1,4-cyclohexanedimethanol, tricyclodecanedimethanol, 1,3-bis (4-hydroxycyclohexyl) propane, 2,2,4,4-tetramethyl cyclobutane 1,3-diol, 1, 3- and 1,4-cyclohexanediol, cyclooctanediol, norbornanediol, pinanediol, decalindiol, dioxane glycol, isosorbide and hydrogenated Bisphenol A, (ib) aralilphatic polyols (such as 1,3-xylylenediol) and/or (ic) aromatic polyols such as 2,2-bis(4-hydroxyphenyl)propane Bisphenol A. Preferably the diol is neopentylglycol (2,2-dimethyl-1,3-propanediol); 2-methyl-1,3-propanediol (MPD); dipropylene glycol, tripropylene glycol, 2-ethyl-2-butyl-1,3-propanediol; 1-ethyl-2-methyl-1,3-propanediol; tricyclodecane dimethanol, 2-ethyl-2-methyl-1,3-propanediol; 1,3-butylene glycol; 1,4-butanediol; 2,3-butanediol; 2-butyl-2-ethyl-1,3 propanediol (BEPD); pentanediol; 2-methyl-2-ethyl-1,3-propane diol; 1,3-pentane diol; 2,2,4-trimethyl-1,3-pentane diol; hexyleneglycol; 1,6-hexanediol; 1,8-octane diol 1,12-dodecanediol; 3-hydroxy-2,2-dimethylpropyl 3-hydroxy-2,2-dimethylpropanoate, hydroxylpivalyl hydroxypivalate (HPHP); the hydroxypivalate of neopentyl glycol) and/or 2,2,4-trimethyl-1,3-pentanediol (TMPD); 1,4-cyclohexanedimethanol, norbornanediol and or isosorbide. Most preferably the diol is neopentylglycol (2,2-dimethyl-1,3-propanediol); 2-methyl-1,3-propanediol (MPD); 1,4-butanediol; pentanediol; 1,6-hexanediol; tricyclodecane dimethanol or isosorbide diol. Also mixtures of diols can be used.

Other suitable difunctional (meth)acrylates (Ai) are "polyester (meth)acrylates" (Ai2). Hereby is meant polyester acrylates, polyester methacrylates or mixtures of both. The polyester (meth)acrylates are prepared by using hydroxyl containing polyesters (polyester polyols). These can be prepared by esterification of polycarboxylic acids with polyols by well-known methods (see, for example, P. J. Flory, J. Am. Chem. Soc. 58, 1877 (1936) and J. Am. Chem. Soc. 63, 3083 (1953) or by a ring opening reaction of a polyol with lactone such as caprolactone or lactide. The polyol is a diol and the polycarboxylic acid is a dicarboxylic acid compound resulting in a polyester di(meth)acrylate. Suitable compounds are e.g. EBECRYL® 5849.

Other suitable difunctional (meth)acrylates (Ai) are epoxy (meth)acrylates (Ai3). In this case an epoxy resin is reacted with a (meth)acrylic acid in a stoichiometric amount, relative to the epoxy functionality. Diglycidyl ether of bisphenol A is particularly suitable in this respect. The epoxy resins may also contain a one or more hydroxyl groups. The reaction with acrylic acid and/or methacrylic acid leads to formation of further hydroxyl groups. Such polyhydric acrylic esters or methacrylic esters are designated as "epoxy (meth)acrylates" (Ai3). Hereby is meant epoxy acrylates, epoxy methacrylates and mixtures of both. Suitable compounds include e.g. EBECRYL® 600, EBECRYL® 3708, EBECRYL® 3701 and EBECRYL® 860.

Other suitable difunctional (meth)acrylates (Ai) are (poly)urethane (meth)acrylates (Ai4). These are formed by the addition of hydroxyl-containing (meth)acrylic esters, such as hydroxyethyl, hydroxypropyl or hydroxybutyl (meth)acrylate, and its alkoxylated, lactone or lactide modified versions to isocyanato-containing mono- or oligomers to give the (poly)urethane (meth)acrylates (Ai4). The term (poly) urethane refers to both urethanes and polyurethanes as well as to a mixture of both. Preferred are "polyurethane di(meth)acrylates". The (poly)urethane (meth)acrylates can be polyurethane diacrylates, polyurethane dimethacrylates or mixtures thereof. Preferred are aliphatic polyurethane (meth)acrylates and more in particular aliphatic polyurethane di(meth)acrylates. Suitable compounds include EBECRYL® 8402, EBECRYL® 4858 and EBECRYL® 4859.

The difunctional (meth)acrylates (Ai) used in the present invention can be monomeric, oligomeric and/or polymeric compounds. Typically, compounds (Ai) are used that have a weight average molecular weight (Mw) of between 150 and 2.000, more typically between 200 and 2.000 Dalton. Typically the Mn of compounds (Ai) is at most 2.000, preferably at most 1.000, more preferably at most 500, and most preferably 300 Dalton, and preferably at least 150 and 200 Dalton.

In a preferred embodiment of the invention the difunctional (meth)acrylates (Ai) are selected from (meth)acrylic esters (Ai1), and/or polyester (meth)acrylates (Ai2). Particularly preferred in the context of the present invention are di(meth)acrylic esters (Ai1).

**Bireactive amine Aii**

The difunctional (meth)acrylate (Ai) as described above is reacted with bireactive amine compounds (Aii) to form secondary amine-terminated copolymer (A)

The bireactive amine (Aii) can be any amine comprising two reactive NH functions towards a (meth)acrylate compound. For instance amino compound (Aii) is selected from Aii-1 amino compounds that contain one (exactly one) primary amino group and/or from (Aii-2) amino compounds that contain two (exactly two) secondary amino groups. The amino compounds (Aii) that are used in the present invention preferably have a molecular weight of 500 Dalton or less, more preferably of 300 Dalton or less, even more preferably of 200 Dalton or less. In the present invention, the molecular weight is typically calculated from the chemical formula of the amine.

Examples of amino compounds (Aii-1) that contain one primary amino group are those that correspond to formula R1-NH2 (I) wherein R1 represents an alkyl, which alkyl optionally is substituted by hydroxy, alkoxy, and/or aryl groups. Compounds (Aii-1) may e.g. be selected from one or more of the following: methylamine, ethylamine, ethanolamine, n-propylamine, iso-propylamine, n-butylamine, iso-butylamine, secbutylamine, tert-butylamine, 3-methylbutylamine, n-pentylamine, iso-pentylamine, n-hexylamine, n-octylamine, n-dodecylamine, 2-ethylhexylamine, iso-nonylamine, cyclopentylamine, cyclohexylamine, 2-methylcyclohexylamine, benzylamine, 2-(2-aminoethoxy)ethanol, 5-aminopentanol, 3-amino-1-propanol, iso-propanolamine, 2-amino-2-methyl-1-propanol, 2-methoxyethylamine, 2-ethoxyethylamine, 3-methoxypropylamine, 1-methoxyisopropylamine, 3-ethoxypropylamine, 3-isopropoxypropylamine, 3-(2-methoxyethoxy)propylamine, 3-(2-ethylhexyloxy)propylamine, furfurylamine, 4-(2-Aminoethyl)morpholine and mixtures thereof. Next to one primary amine compounds may comprise one or more tertiary amino groups. Examples include Suitable N,N-dialkyl-diaminoalkanes and N,N-dialkanol-diaminoalkanes are N,N-dialkyldiaminopropanes and/or N,N-dialkanoldiaminopropanes, such as N,N-dimethyl-1,3-diaminopropane (DMAPA), N,N-diethyl-1,3-diaminopropane, N,N-diethanol-1,3-diaminopropane N,N-di-n-propyl-1,3-diaminopropane, 4-morpholinopropylamine, 3-(N-piperidino)propylamine and/or N,N-diphenyl-1,3-diaminopropane.

Suitable bireactive amine compounds (Aii-2) that may be used are e.g. those that correspond to formula R2HNR4-NHR3 (II) wherein R2 and R3 represent, each independently, an alkyl, optionally substituted by hydroxy, alkoxy, tertiary amine and/or aryl, with the proviso that R2 and R3 can be linked in order to form a ring, and R4 is chosen from the group of alkylene and aralkylene chains, containing up to 50 carbon atoms (typically up to 20 carbon atoms) and which may contain from 1 to 20 ether bridges (typically from 1 to 8 ether bridges) and/or from 1 to 3 tertiary amine bridges. The term "alkylene", as used herein is meant to designate bivalent straight, branched or cyclic hydrocarbon radicals. The term "aralkylene", as used herein is meant to designate an alkylene wherein one or more hydrogen groups are replaced by aryl groups. Preferably, R4 is chosen from the group of bivalent radicals of ethylene, 1,2-propylene, trimethylene, hexamethylene, 2,2-dimethylpropylene, 1-methyltrimethylene, 1,2,3-trimethyltetramethylene, 2-methylpentamethylene, 2,2,4-(or 2,4,4-)trimethylhexamethylene, metaxylylene, 3,5,5-trimethylcyclohexyl-1-ene-3-methylene, bis(cyclohexyl-4-ene)methane, bis(4-methylcyclohexyl-3-ene)methane, cyclohexyl-1,3-ene, cyclohexyl-1,4-ene, 1,4-bis(propoxyl-3-ene)butane, 3,6-dioxaoctylene, 3,8-dioxadodecylene, 4,7,10-trioxatridecylene, poly(oxytetramethylene), poly(oxypropylene) with 2 to 15 1,2-propylene oxide units, poly(oxypropylene-co-oxyethylene) with 2 to 15 propylene oxide and 2 to 15 ethylene oxide units, 2,2-dimethylpropylene. Examples of amino compounds (Aii-2) include N,N-Dimethylethylenediamine, 1,4,7-trimethyldiethylenetriamine, piperazine, 2,3,5,6-tetramethylpiperazine, N,N'-Di-tert-butylethylenediamine.

Preferred are alkylamines (Aii-1) where the alkyl group comprises from 1 to 30 carbon atoms, in particular from 1 to 18 carbon atoms, more in particular from 1 to 14 carbon atoms, even more particular 1-8 carbon atoms which alkyl group optionally can be substituted by one or more hydroxy groups. The term "alkyl", as used herein, is defined as including saturated monovalent hydrocarbon radicals having straight, branched or cyclic moieties or combinations thereof.

Especially preferred are ethylamine, n-propylamine, n-butylamine, n-hexylamine, 2-ethylhexylamine, cyclohexylamine, n-octylamine, n-dodecylamine, 2-(2-aminoethoxy)ethanol, 5-aminopentanol, ethanolamine, 3-amino-1-propanol, iso-propanolamine, 2-amino-2-methyl-1-propanol and N,N-dialkyl-diaminoalkanes, and mixtures thereof. Particularly preferred is ethylamine, n-propylamine, iso-propanolamine, n-butylamine, iso-butylamine, n-pentylamine, iso-pentylamine, n-hexylamine, 2-ethylhexylamine, n-octylamine and mixtures thereof. Most preferred are ethylamine, n-propylamine, n-butylamine and mixture thereof.

In the preparation of the secondary amine terminated copolymer (A) preferably, the difunctional (meth)acrylate (Ai) is added to the bireactive amine (Aii) in way that there is an excess of amine present throughout the reaction duration. It may also be possible to reverse the order and to add the bireactive amine to the difunctional (meth)acrylate. In the latter case a final molar excess of the bireactive amine is used.

**Multifunctional (meth)acrylate(B)**

The secondary amine -terminated copolymer (A) in present invention is than further reacted with a multifunctional (meth)acrylate compound (B) which is different from (meth)acrylate compound (Ai) to form the amino (meth)acrylate of present invention. The reaction conditions are similar as described above for reaction of (meth)acrylate compound (Ai) with amino compound (Aii) - see reaction (ii) above.

Preferably, the molar ratio of the multifunctional (meth)acrylate compound (B) to the secondary amine terminated copolymer (A) is at least 2:1. The ratio is preferably not more than 10:1, more preferably not more than 6:1.

Typically a single type of multifunctional (meth)acrylate compound (B) is used, though it can be mixed with one or more types of other multifunctional (meth)acrylate compounds. The amino(meth)acrylate of the invention has a high (meth)acrylate functionality. Preferably, the functionality can be 2 or more and is preferably 3 or more, more preferably 4 or more, such as 5, 6, 7, 8, 9 or 10.

The multifunctional (meth)acrylate compound (B) is different from the difunctional (meth)acrylate compound (Ai). Preferably the multifunctional (meth)acrylated compound (B) is a tri- or higher functional (meth)acrylate compound. (Meth)acrylated compounds (B) are esters of (meth)acrylic acid with polyols, i.e. with compounds that contain three or more hydroxyl groups. Examples of suitable tri- or higher functional polyols for making (meth)acrylated compounds B include tri-hydric alcohols, such as but not limited to trimethylolpropane, glycerol, lactone or lactide modified forms of these and ethoxylated and/or propoxylated forms of these; tetra-hydric alcohols, such as pentaerythritol or trimethylolpropane dimer, lactone or lactide modified forms of these and ethoxylated and/or propoxylated forms of these; hexa-hydric alcohols such as but not limited to dipentaerythritol, lactone or lactide modified forms of these and ethoxylated and/or propoxylated forms of these.

**Polymeric amino (meth)acrylate**

The polymeric amino (meth)acrylate preferably have a content of double bonds (calculated as meq C=C/g) of at least 0.5 meq/g, more preferably at least 0.75 meq/g, most preferably 1 meq/g. The nitrogen content of the polymeric amino (meth)acrylate of the invention is preferably 1 and 6 meq N/g, more preferably between 1.2 and 5 meq N/g and most preferably between 1.4 and 4 meq N/g. Typically the polymeric amino (meth)acrylates of current invention are liquid at room temperature and have a viscosity at 25°C of from 200 to 200.000 mPa.s, more preferably of from 500 to 100.000 mPa.s, most preferably of from 1.000 to 75.000 mPa.s. The viscosity typically is measured using a cone and plate type rheometer MCR100 (Paar-Physica) following ISO 3219. The measurement geometry for measuring the polymeric amino (meth)acrylates of the invention was of a diameter of 50 mm and an angle of 1 ° for the cone. The measurement was a flow curve in controlled shear rate ranging from D=0 s-1 (zero viscosity), D=2.5 s-1 to D=2500 s-1 at 25° C.

The polymeric amino(meth)acrylates according to the invention have also a low odor after cure, which make them useable in applications such as food packaging where off- odors should be absolutely avoided.

Moreover, these amino(meth)acrylates show a pot-life long enough to make them useable in an industrial environment. Eventually, these amino(meth)acrylates have typically a low color (below 1 Gardner), which make them useable in clear coatings, adhesives or varnishes

The polymeric amino(meth)acrylates are in particular very effective in low energy curing applications. They are also suitable in applications requiring high cure speed like the graphic arts industry.

The polymeric amino(meth)acrylates according to the invention and/or radiation curable compositions comprising same, are highly suited for use as surface cure booster, and thus increase the surface curing when used in coatings for UV applications and more in particular UV LED applications. They advantageously act as amino synergists.

The polymeric amino(meth)acrylate can be a polymer as represented by the formula (I)

   B'-Aii'-[Ai'-Aii']n-Ai'-Aii'-B'            (I);

Wherein

   n is an integer from 0 to 10

   Ai' is a unit derived from a di(methacrylate) compound Ai

   Aii' is a unit derived from bireactive amine compound Aii

   B' is a unit derived from a multifunctional (meth)acrylate compound B.

The secondary amine terminated copolymer may be represented by the formula (II):

   Aii"-[Ai'-Aii']n-Ai'-Aii"            (II);

Wherein n is an integer from 0 to 10

   Ai' is a unit derived from a di(methacrylate) compound Ai

   Aii' is a unit derived from a bireactive amine compound Aii

Aii" is a unit derived from a bireactive amine compound Aii and includes one secondary amine group.

Polymeric amino (meth)acrylates of the invention can be used for the making of coatings, paints, inks, varnishes (including overprint varnishes) and adhesives but also for the making of gel coats, composites, molding compositions or 3D articles. Materials of the invention are further suitable for use in 3D printing.

**Radiation curable compositions**

Radiation curable compositions used in the present invention preferably contain at least 0.5 percent by weight of one or more polymeric amino (meth)acrylates as described above (any of the above). More preferably the composition comprises at least 2 percent by weight of one or more amino(meth)acrylates according to the invention. Most preferably the composition comprises at least 5 percent by weight of one or more amino(meth)acrylates according to the invention. The amount of polymeric amino (meth)acrylates according to the invention usually does not exceed 99 percent by weight (wt percent). Preferably the amount of polymeric amino (meth)acrylates according to the invention usually does not exceed 90, more preferably 75, most preferably 50 percent by weight (wt percent).

The polymeric amino (meth)acrylate of the invention have been found to be very effective in UV and in EB (electron beam) curing and can be used alone or along with other radiation curable polymer precursor (C). By "other" is meant a (meth)acrylate different from the polymeric amino (meth)acrylate of the invention.

The term polymer precursor is used to designate a monomer or oligomer or mixtures thereof which have suitable polymerizable functionality, preferably comprising at the chains ends or laterally along the chain, one or more acrylic, methacrylic or vinyl groups. This radiation curable polymer precursor is generally a monomer or oligomer comprising one or more acrylic, methacrylic or vinyl groups. Preferably it is a (meth)acrylated compound (C) that is different from the polymeric amino (meth)acrylate according to the invention. The radiation curable composition may optionally comprise 1 percent of one or more (meth)acrylated compounds (C).

Preferred oligomers (C1) include (meth)acrylated acrylic oligomers, aromatic acid (meth)acrylates, (meth)acrylated polybutadienes, (meth)acrylated polyesters, urethane (meth)acrylates, epoxy (meth)acrylates and hyperbranched (meth)acrylates such as hyperbranched polyester polyol (meth)acrylates. Preferred oligomers (C1) are those having a weight average molecular weight of at least 1.000 and not more than 6.000 Dalton.

When used, the quantity of oligomer (C1) in the radiation curable composition is generally at least 1 wt percent, more preferably at least 5 wt percent, most preferably at least 10 wt percent. The quantity of oligomer does usually not exceed 95 wt percent, more preferably it does not exceed 90 wt percent by weight, most preferably it does not exceed 75 wt percent, relative to the total weight.

The radiation curable composition can also contain lower molecular weight (meth)acrylated monomers (C2) such as (meth)acrylic acid, beta-carboxyethyl (meth)acrylate, butyl(meth)acrylate, methyl(meth)acrylate, isobutyl (meth)acrylate, 2-ethylhexyl(meth)acrylate, cyclohexyl (meth)acrylate, n-hexyl (meth)acrylate, isobornyl (meth)acrylate, isooctyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, 2-(2- ethoxyethoxy)ethyl(meth)acrylate, 2-butoxyethyl (meth)acrylate, Cardura (meth)acrylate (the (meth)acrylate of the glycidyl ester of neodecanoic acid also known as Cardura(R) E-10P), phenylglycidylether(meth)acrylate and the ethoxylated or/and propoxylated derivatives thereof, the (meth)acrylates obtained from the esterification with (meth)acrylic acid of aliphatic glycidyl ethers, especially those wherein the alkyl chain comprises from 6 to 24 carbon atoms, more preferably from 8 to 18 carbon atoms, and/or of glycidyl esters of saturated and unsaturated carboxylic acids, especially the glycidyl esters of long chain alkyl carboxylic acids wherein the alkyl chain, 1,6-hexanediol di(meth)acrylate, tricyclodecane dimethanol di(meth)acrylate, isosorbide di(meth)acrylate, di or tri propylene glycol di(meth)acrylate, ethoxylated and/or propoxylated neopentylglycoldi(meth)acrylate, isosorbide di(meth)acrylate, and ethoxylated and/or propoxylated derivatives thereof, bisphenol A di(meth)acrylate and the ethoxylated and/or propoxylated derivatives thereof, trimethylolpropanetri(meth)acrylate and the ethoxylated and/or propoxylated derivatives thereof, di-trimethylolpropanetri(meth)acrylate, glyceroltri(meth)acrylate and the ethoxylated and/or propoxylated derivatives thereof, pentaerythritoltriacrylate (PETIA) and the ethoxylated and/or propoxylated derivatives thereof, dipentaerythritol penta or hexaacrylate and the ethoxylate and/or propoxylated derivatives thereof.

When used, the quantity of monomers (C2) in the radiation curable composition is generally at least 1 percent, preferably at least 5 percent by weight, more preferably at least 10 percent by weight. The quantity of oligomer does usually not exceed 99 percent by weight, preferably it does not exceed 95 percent by weight, most preferably it does not exceed 80 percent by weight relative to the total weight.

In a specific embodiment of the invention, the compound (C) is an amino (meth)acrylate different from the polymeric amino (meth)acrylate of the invention. Examples of such amino (meth)acrylates are EBECRYL(R) 80, 81, 83, 85, LEO 10551, LEO 10552 or LEO 10553 available from Allnex. Preferably however, no such amino (meth)acrylates (C) are used.

Radiation curable compositions used in the present invention generally comprise at least one photoinitiator that is a compound that can generate radicals by absorption of light, typically UV light. Typical photoinitiators are described in "The Chemistry of Free Radical Polymerization", edited by Graeme Moad and David H.Solomon; Pergamon (1995), pages 84 to 89. The photoinitiators usable in the compositions used in the invention can be selected from hydroxyketones, aminoketones, benzildimethylketals, acyl phoshines, benzophenone derivatives, thioxanthones and mixtures thereof. Polymeric or multifunctional photoinitiators known to be less easily extracted than monomeric products are preferred. Typically, the amount of photoinitiator in the composition is comprised between 0 and 15 percent by weight, more preferably between 1 to 10 percent by weight, most preferably between 1 to 5 percent by weight

Alternatively, radiation curable compositions of the invention can be cured without photoinitiator, typically by electron beam though UV curing without photoinitiator is also possible for instance when Excimer lamps are used.

The radiation curable composition can also contain additives commonly used in varnishes, paints, coatings, adhesives and inks, such as substrate wetting agents, antifoam agents, dispersing agents, flow modification agents, slip agents, plasticizing diluents, fire retardant agents, UV- protection agents, adhesion promoters, amine synergists, reinforcing agents and stabilizers. The total amount of commonly used additives usually does not exceed 10 percent by weight. Preferably, the composition comprises from 0.01 to 5 percent by weight of commonly used additives as described here above.

The radiation curable composition can also contain one or more pigment, dye or colorant. The colorants, dyes and pigments usable in the compositions of the invention are all pigments known in the art. A list of such pigments can be found in the Color Index. More particularly, those pigments may be cited such as Process Yellow 13 (Diarylide Yellow - Irgalite BAW of Ciba, Permanent GR of Clariant), Process Magenta Pigment 57 (Bona Calcium - Ilobona 4BY of Sun, Irgalite SMA of IGM), Process Blue 15.3 (Copper Phthalocyanine - Irgalite GLO of IGM, Hostaperm Blue B2G of Clariant), Process Black 7 (Oxidised Carbon Black - Special Black 250; Special Black 350 of Degussa), etc. The colorants and/or pigments are preferably used at 0-50 percent by weight of the total weight of the radiation curable composition, more preferably at 0-40 percent by weight.

The radiation curable composition may also comprise from 0 to 20 percent by weight of fillers or non- reactive diluents or solvents. The radiation curable compositions of the invention can be produced by mixing the selected compounds thereof by conventional known methods. The blend can be heated, if desired, to facilitate mixing.

Radiation curable compositions as described here above are used for making varnishes (including overprint varnishes), coatings, paints, adhesives and inks. By inks is meant to understand liquid inks as well as paste inks. In particular flexography inks, serigraphy inks, inkjet inks, offset inks and/or xerography inks can be made using the amino (meth)acrylates according to the invention. Inks typically contain pigments, dyes and/or colorants in addition to other possible additives like fillers, wetting and flow modifiers, leveling additives, viscosity modifiers and dispersing additives. They can further be used in the making of composites and gel coats; molding compositions or for the making of 3D articles.

The polymeric amino (meth)acrylates according to the invention are also very suitable for the making of coating compositions and for the coating of various types of substrates. Another aspect of the invention hence relates to a method for coating an article or substrate comprising the steps of:

(a) providing a radiation curable composition comprising the polymeric amino (meth) acrylate as described here above,

(b) applying said composition onto a surface, and

(c) irradiating the surface with actinic radiation.

This method is particular suitable for improving the surface curing.

In this method advantageously an UV LED lamp is used as irradiation source and more in particular one that is emitting at 365, 385, 395 or 405 nm.

In an embodiment the compositions can be applied to the surface by any coating technique, including the spray, curtain, dip, pad and roll-coating techniques, as well as any printing technique such as lithography, serigraphy, flexography, gravure and inkjet printing.

The substrate to be coated or inked can be any substrate, such as wood, metal, paper, plastic, fabric, fiber, ceramic, concrete, plaster, glass, etc. Good results have been obtained with flexible substrates, especially with paper and plastic substrates. Materials of the invention permit the application of inks, coatings, paints and varnishes (including overprint varnishes) of the invention on heat sensitive materials like e.g. MDF, some metal alloys etc.

The coating can be a clear coating or a pigmented coating. The pigmented coating can be one that is based on light pigments (such as white, light blue, etc.).

The irradiation of the surface can be done by high energy electrons (EB) or UV radiation. For the UV irradiation multiple types of lamps can be used, going from the classical medium pressure Hg, to metal halide UV lamps to UV light emitting diodes, not excluding other lamps/LEDs emitting UV light.

Various types of actinic radiation can be used such as ultraviolet (UV) radiation, gamma radiation, and electron beam. A preferred means of radiation curing is ultraviolet radiation. Any ultraviolet light source, as long as part of the emitted light can be absorbed by the photo-initiator (system), may be employed as a radiation source, such as, a high or low-pressure mercury lamp, a cold cathode tube, a black light, UV-A lamps, Xenon lamp, an ultraviolet LED, an ultraviolet laser, and a flash light or even visible light sources. Currently on the market you find 365, 385, 395 and 405 nm UV LEDs.

The coatings, varnishes (including overprint varnishes), paints, adhesives and inks obtained by the method according to the invention can be cured at high line speeds or with low energy radiation, which makes them very suitable for packaging applications, such as food packaging, but also other types of packaging used for luxury products such as cosmetics and pharmaceuticals. Also provided in the present invention are food packaging materials coated or inked with a radiation curable composition according to the invention (any of the ones described).

The present invention therefore also relates to the coatings, varnishes (including overprint varnishes), paints, adhesives and inks obtained with the method of the invention and/or prepared from the polymeric amino (meth)acrylates according to the invention.

Typically, UV LED technology is used in the graphic arts market, in wood coatings, electronics, the making of composites, gel coats, molding compositions, 3D printing, etc.

The present invention is illustrated by the following, non-limiting examples.

**Examples**

Following examples will illustrate the aspects and embodiments of the present invention.

**Example 1**

A reaction vessel was charged with 292g of n-butylamine (4 moles) (bireactive amine Aii) as well as 200 ppm of stabilizer relative to total amount of n-butylamine and HDDA. The reaction mixture was heated and the temperature was set at 50 degrees centigrade. 678 g of HDDA (3 moles) (difunctional (meth)acrylate Ai) was added dropwise so that the temperature was not exceeding 75 °C. Once the addition was completed, the mixture was further reacted for 16 h at 60 °C. After this the reaction mixture was cooled down to 40°C and 932 g of ditrimethylolpropane tetraacrylate (2 moles) (DiTMPTA) ((meth(acrylated) compound B) was added under stirring over a period of 30 min. Once the addition was completed, the reaction temperature was increased to 70 °C and left to maturate at this temperature until disappearance of the secondary amine peak at 1642 cm$^{-1}$ in the near infrared spectrum. A clear, low odor product is formed with a viscosity of 41000 mPa.s measured by C&P at 25°C. The product has a nitrogen content* of 2.1 meq/g and a double bond** content of 3.2 meq/g. The amount of residual difunctional acrylate HDDA measured by HPLC-UV is below 100 ppm.

Table 1 shows the amounts of each compound that has been used.

**Table 1-** EBECRYL 45 is a tetrafunctional polyether acrylate commercially available from allnex

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| Butylamine | 292 g (4 mole) | 292 g (4 mole) | 219. g (3 mole) | 292 g (4 mole) | 292 g (4 mole) | 219 g (3 mole) | 292. g (4 mole) | 292. g (4 mole) | | | 292 g (4 mole) |
| monoethanolamine | | | | | | | | | 244 g (4 mole) | | |
| N,N'-Dimethyl-1-3-propanediamine | | | | | | | | | | 408 g (4 mole) | |
| HDDA | 678 g (3 mole) | 678 g (3 mole) | 452 g (2 mole) | 678 g (3 mole) | 678 g (3 mole) | 452 g (2 mole) | 678 g (3 mole) | 678 g (3 mole) | 678 g (3 mole) | 678 g (3 mole) | |
| DPGDA | | | | | | | | | | | 726 (3 mole) |
| DiTM PTA | 932 g (2 mole) | 1165 g (2.5 mole) | | | | | | | 932 (2 mole) | 1165 (2.5 mole) | 932 (2 mole) |
| EBECRYL45 | | | 1204 g (2 mole) | 1204 g (2 mole) | 1806 g (3 mole) | | | | | | |
| OTA-480 | | | | | | 960 g (2 mole) | 960 g (2 mole) | | | | |
| DPHA | | | | | | | | 2096 (4 mole) | | | |
| Viscosity (mPa.s at 25°C) | 41000 | 17100 | 5300 | 7950 | 2300 | 2300 | 2470 | 30000 | 15700 | 32400 | 17700 |
| N content (meq/g)* | 2.1 | 1.9 | 1.6 | 1.8 | 1.4 | 1.8 | 2.1 | 1.3 | 2.2 | 3.5 | 2.1 |
| double bond content (meq/g)** | 3.2 | 3.7 | 3.2 | 2.8 | 3.6 | 2.5 | 2.1 | 7.2 | 3.2 | 3.6 | 3.1 |
| Residual HDDA/ DPGDA (ppm)** | < 100 | 100 | 145 | < 100 | < 100 | 130 | 110 | < 100 | <100 | 120 | 125 |

**\*N content is calculated**

meq/g N = ((weight bireactive amine Aii/ Mw bireactive amine Aii x number of nitrogen atoms present in compound Aii) / (weight compound B + weight compound Ai + weight compound Aii)*1000

example 1

meq/g N in example 1 = ((292 g/ 73 g/mole x 1) /(932g+678g+292g)*1000 = 2.1 meq/g

**\*\*double bond content is calculated :**

Double bond content (meq/g) = (# mole of compound B * (meth)acrylate functionality+# mole of compound Ai * 2 - #mole of compound Aii * NH functionality)/(weight compound B + weight compound Ai + weight compound Aii)*1000

(meth)acrylate content (meq/g) = ((2 mole x 4) + (3 mole * 2) − (4 mole x 2))/ (932g + 678g + 292g)*1000 = 3.2 meq/g

\*\*\* The quantification of Hexanediol diacrylate (= HDDA) and Dipropyleneglycol diacrylate (DPGDA) content in Radcure products is performed by using high performance liquid chromatography with an ultraviolet detector (HPLC-UV) at $\lambda$ = 210 nm on a reversed phase C18 column.

## Comparative examples

Comparative examples 1 and 2 are amino acrylates made in a single step reaction where an excess of (meth)acrylated compound (Ai) is used vs amino compound (Aii). A disadvantage of these compounds is that they contain a large amount of lower molecular weight difunctional acrylate compounds which can migrate from the cured coating.

In comparative example 1 the reaction vessel is charged with 219 g of n-butylamine (3 moles) as well as 200 ppm of stabilizer relative to total amount of n-butylamine and HDDA.

The reaction mixture was heated and the temperature was set at 50 degrees centigrade. 904 g of HDDA (4 moles) was added dropwise so that the temperature was not exceeding 75 degrees centigrade. Once the addition was completed, the mixture was further reacted for 16 h at 60 degrees centigrade until the free amino concentration was lower than 0.02 percent, as measured by titration. A clear product is formed with a viscosity of 1500 mPa.s measured by C&P at 25°C. The product has an amine content of 2.6 meq/g and a double bond content of 1.78 meq/g. The residual amount of HDDA measured by HPLC-UV is 3.8 %.

Comparative example 2 is produced in a similar way as comparative example 1 except that n-butylamine is replaced by monoethanolamine. A clear product is formed with a viscosity of 5900 mPa.s measured by C&P at 25°C. The product has an amine content of 2.7 meq/g and a double bond content of 1.8 meq/g. The residual amount of HDDA measured by HPLC-UV is 3.5 %.

Thus, based purely on the residual amount of low molecular weight diacrylate it might be anticipated that cured coatings or inks produced with the amino (meth)acrylate of present invention would produce lower levels extractable compounds than with the comparative examples 1 and 2.

Comparative example 3 is EBECRYL 10553 commercially available from allnex which is a low migration amino acrylate. For preparing this example no secondary amine terminated copolymer is formed. The product has a viscosity of 200 mPa.s measured by C&P at 25°C and has an amine content of 0.5 meq/g and a double bond content 4.3 meq/g. EBECRYL 10553 is less suitable for use in combination with low energy curing devices such as UV LED lamps, which may be due to the fact that is not a secondary amine, or it has a low amine content.

Comparative example 4 is EBECRYL LED 03 commercially available from allnex. For preparing this example no secondary amine terminated copolymer is formed. EBECRYL LED 03 has a viscosity of 450 mPa.s measured by C&P at 25°C and has an amine content of 3 meq/g and a double bond content 1.9 meq/g.

Comparative example 5 is SpeedCure EDB (Ethyl-4-(dimethylamine)benzoate) commercially available from Lambson.

**Application examples**

With the above compositions and some comparative compositions the following ink formulations (cyan ink) were prepared. The composition of the various ink formulations is given in Table 2. EBECRYL 870 is a hexafunctional polyester acrylate oligomer and EBECRYL 1608 is a bisphenol A epoxy acrylate diluted in OTA-480 from allnex. Omnirad TPO-L and Omnirad ITX are commercially available photoinitiators from IGM.

Stab 12/1: polymerization inhibitor (5 percent solution of NPAL in DPGDA DiPropyleneGlycolDiAcrylate); NPAL = Tris(N-nitroso-N-phenylhydroxylamine)aluminium salt

| ink formulation | Fex |
|---|---|
| EBECRYL 870 | 25-30 |
| EBECRYL 1608 | 25-30 |
| Stab 12/1 | 1 |
| Cyan pigment Heliogen | 17 |
| Talc Westminster | 6 |
| Amino compound | 0-7.5 |
| 80% Omnirad TPO-L; 20% OMNIRAD ITX | 10 |
| OTA-480 | 0-10 |

**Table 2**

The offset ink formulations were tested for viscosity, reactivity, solvent resistance and lithographic behavior. The results are summarized in Table 3 and 4.

Curing of the ink is done under ambient atmosphere by UV LED with an air-cooled Phoseon Firejet. with a peak irradiance of 8 W/cm2 at 365 nm wavelength (LED365). The distance of lamp to substrate is 1 cm.

Cure speed is expressed as max belt speed or minimum UV dose (under a given lamp) giving a fully cured film. The surface cure is tested on an ink of 1.8 $\mu$m applied on a BOPP C58 film (bioriented polypropylene) by the graphite test. This is carried out by putting some graphite carbon black (Pencil No. 2) onto the coated surface and rubbing with a finger and then with a cotton swab. As long as a black trace is left on the coated surface, the film is not fully cured and passed again under the LED365. If no black stain remains on the surface, the surface is considered cured."10 m/min" means that curing at 10 m/min was necessary to pass the graphite test. The UV Energy dose is automatically derived from the measured UV irradiance (W/cm2) with the UV Power Puck(R) II radiometer and the value for the UVA (320-390 nm) zone is recorded. Through cure of the film is investigated by double rubs (IPA) with a wad drenched in isopropanol. A minimum of 50 isopropanol double rubs is required for a fully cured coating with optimum performance.

14

**Table 3**

| Formulation example | amino acrylate | w% in cyan ink | viscosity mPa.s at 25°C (100 s-1) | Surface Cure speed LED 365 nm 8W (m/min)/ UV dose (mJ/cm2) | EP %* | IPA double rubs |
|---|---|---|---|---|---|---|
| Example F1 | synth ex 1 | 7.5 | 39300 | 10 / 960 | 29 | >50 |
| Example F2 | synth ex 2 | 7.5 | 36550 | 12.5 / 770 | 28 | >50 |
| Example F3 | synth ex 3 | 7.5 | 37300 | 15 / 640 | 29 | >50 |
| Example F4 | synth ex 4 | 7.5 | 34900 | 12.5 / 770 | 29 | >50 |
| Example F5 | synth ex 5 | 7.5 | 30200 | 10 / 960 | 28 | >50 |
| Example F6 | synth ex 6 | 7.5 | 36100 | 15 / 640 | 28 | >50 |
| Example F7 | synth ex 7 | 7.5 | 36400 | 12.5 / 770 | 30 | >50 |
| Example F8 | synth ex 8 | 7.5 | 34700 | 12.5 / 770 | 29 | >50 |
| Example F9 | synth ex 9 | 7.5 | 39600 | 12.5 / 770 | 27 | >50 |
| Example F10 | synth ex 10 | 7.5 | 44650 | 10 / 960 | - | >50 |
| Example F11 | synth ex 11 | 7.5 | 37000 | 12.5 / 770 | 31 | >50 |
| Example F12 | Synth ex 1 | 15 | 41100 | 15 / 640 | - | >50 |

* EP % : The ink-water balance properties (water uptake) of the ink are evaluated on hydroscope equipment and are expressed by EP %. The device consists of three rollers: a small rubber roller - measures the tack of the ink film- and two larger temperaturecontrolled metal rollers. Above the two metal rollers there is a space (ink reservoir) where 10 g of ink is inserted. The sides of the ink bath have been sealed, so that all ink and water are enclosed therein. Fountain solution is dripped into the ink at a speed of 1.3 ml/min, using an accurate pumping system, located at two points above the ink bath. Ink and fountain solution are jointly forced through the opening between the rollers, so that they undergo a joint shear stress. When an excess of water starts to appear on the ink surface, the ink is "saturated" with water, indicating the emulsion point (expressed in %).

**Table 4**

| | Amino compound | w% in cyan ink | viscosity mPa.s at 25°C (100 s-1) | Surface Cure speed LED 365 nm 8W (m/min)/ UV dose (mJ/cm2) | EP% | IPA double rubs |
|---|---|---|---|---|---|---|
| Comp example CF1 | no | 0 | 36400 | 1.5 / 6400 | 29 | >50 |
| Comp example CF2 | SpeedCure EDB | 2.5 | 37100 | 7.5 / 1280 | 32 | >50 |
| Comp example CF3 | Comp synth ex 1 | 7.5 | 37250 | 15 / 640 | 33 | >50 |
| Comp example CF4 | Comp synth ex 2 | 7.5 | 37240 | 10 / 960 | 55 | >50 |
| Comp example CF5 | EBECRYL LEO 10553 | 7.5 | 39620 | 3 / 3200 | - | >50 |

(continued)

| | Amino compound | w% in cyan ink | viscosity mPa.s at 25°C (100 s-1) | Surface Cure speed LED 365 nm 8W (m/min)/ UV dose (mJ/cm2) | EP% | IPA double rubs |
|---|---|---|---|---|---|---|
| Comp example CF6 | EBECRYL LED 03 | 7.5 | 40768 | 15 / 640 | 60 | >50 |

Table 4 shows that compositions according to the present invention permit to obtain inks having an improved reactivity to CF1 where no amino acrylate is added, but also compared to formulations using e.g. EBECRYL 10553 having a lower amino content CF5. Moreover, the amino (meth)acrylates according to the invention can be used in an offset ink as they do not significantly impact the ink-balance properties.

Table 5 shows that compositions according to present invention show also an improved cure speed to CF1 where no amino acrylate is added when cured with 80W/cm mercury UV bulb from IST. A similar reactivity can be obtained as with commercially available aminobenzoates.

**Table 5**

| | Viscosity 25°C (mPa.s) 100 s-1 | Cure speed (m/min) 80W/cm Hg lamp |
|---|---|---|
| Example F2 | 38300 | 45 |
| Example F3 | 37500 | 40 |
| Example CF1 no amino (meth)acrylate | 37200 | 20 |
| Example CF2 Speedcure EDB | 35400 | 45 |

Most common amino acrylates are often not stable in combination with pigments and show an increase in viscosity when stored for a certain period at elevated temperatures. Some of the above compositions are tested in following magenta ink.

| ink formulation | Fex Magenta ink |
|---|---|
| EBECRYL 870 | 25-30 |
| EBECRYL 1608 | 25-30 |
| Stab 12/1 | 1 |
| Magenta pigment SMA | 18 |
| Talc Westminster | 3 |
| Amino compound | 0-7.5 |
| 80% Omnirad TPO-L; 20% OMNIRAD ITX | 10 |
| OTA-480 | 8-13 |

**Table 6**

After 24hr storage of the ink at room temperature the initial viscosity was measured. After this the inks were stored at 60°C in a ventilated oven and the viscosity of the ink was measured again after 28 days.

Table 7 below show that the inks based on amino (meth)acrylates of present invention show a much lower viscosity increase when compared to comparative synthesis example 2.

**Table 7**

| | | | Initial viscosity (Pa.s at 25°C) | | viscosity (Pa.s at 25°C) after 28days at 60°C | | % viscosity increase after 28days at 60°C | |
|---|---|---|---|---|---|---|---|---|
| | | | shear rate 100s-1 | shear rate 2.5s-1 | shear rate 100s-1 | shear rate 2.5s-1 | shear rate 100s-1 | shear rate 2.5s-1 |
| F 13 | Synthesis example 1 | | 42.4 | 102 | 55.6 | 164.2 | 31% | 61% |
| F 14 | Synthesis Example 3 | | 36.5 | 95.1 | 42 | 153 | 15% | 61% |
| F 15 | Synthesis example 4 | | 44.9 | 109 | 61.6 | 176.2 | 37% | 62% |
| F 16 | Synthesis Example 6 | | 34.1 | 94.6 | 45.1 | 161 | 32% | 70% |
| CF 7 | Comp synthesis example 2 | | 40.2 | 98 | 66.5 | 236 | 65% | 141% |
| CF 8 | SpeedCure EDB | | 42.9 | 96 | 54.6 | 136 | 27% | 42% |

The amino (meth)acrylates according to present invention are also suitable for use in an overprint varnish. The results shown in table 8 show that F17 and F18 show a significant higher reactivity for amino (meth)acrylates of present invention when cured with a 365 nm 8W LED lamp in comparison to comparative formulation example CF9 where no amino (meth)acrylate is added. Also we notice that it is possible to generate coatings with low yellowing after cure.

**Table 8**

| | CF9 | F17 | F18 |
|---|---|---|---|
| EBECRYL 600 | 26 | 23 | 20 |
| EBECRYL 160 | 39 | 34 | 30 |
| EBECRYL 895 | 22 | 19 | 17 |
| DPGDA | 6 | 5 | 5 |
| Synth Example 4 | | 12 | 20 |
| IRGACURE TPO-L | 8 | 8 | 8 |
| Viscosity, 25°C, mPa.s | 980 | 1550 | 1950 |
| Surface cure reactivity (m/min) / UV dose (mJ/cm$^2$) - graphite test*, 365 nm, 8W LED lamp | < 1 / < 9600 | 5 / 1920 | 12.5 / 770 |
| Yellowing* direct (5m/min) : b-value | 4 | 3.84 | 3.34 |
| yellowing after 24h : $\Delta$b value | 1.14 | 1.23 | 1.18 |

*The surface cure reactivity and yellowing of the overprint varnish was tested on a 10 $\mu$m thick film applied to a non-porous substrate (white paper, Silico Ultraflat). The yellowing of the samples was then evaluated by measuring, after various periods, the b-values of the L*a*b system LAB values (measured with a Braive Supercolor Instrument). The $\Delta$b value represents the value measured on the coated substrate subtracted with the value measured on the uncoated Silico Ultraflat white paper. The samples are cured at their surface cure reactivity. Yellowing ($\Delta$b-value) is expressed as the b-value measured on the coated substrate minus the value of the uncoated substrate.

## Claims

1. Polymeric amino (meth)acrylate suitable for use in radiation curable compositions, wherein said polymeric amino (meth)acrylate is the reaction product of a secondary amine-terminated copolymer (A) and a multifunctional (meth)acrylate (B);

   wherein said secondary amine-terminated copolymer is the reaction product of a difunctional (meth)acrylate (Ai) and a bireactive amine (Aii); and
   wherein the multifunctional (meth) acrylate (B) is different from the difunctional (meth)acrylate (Ai) and which multifunctional (meth) acrylate comprises two or more (meth)acrylate groups.

2. The polymeric amino (meth)acrylate suitable for use in radiation curable composition according to claim 1, wherein the molar ratio of the multifunctional (meth)acrylate (B) to the secondary amine terminated copolymer (A) is at least 2:1.

3. The polymeric amino (meth)acrylate according to claim 1 or 2, wherein the molar ratio of difunctional (meth)acrylate (Ai) relative to the bireactive amine (Aii) is less than 1, preferably from 0.5 to 0.9.

4. The polymeric amino (meth)acrylate according to any one of the preceding claims, wherein the multifunctional (meth) acrylate (B) comprises 2 or more, preferably 3 or more, most preferably 4 (meth) acrylate groups or more.

5. The polymeric amino (meth)acrylate according to any one of the preceding claims, wherein the bireactive amine (Aii) is selected from an amine comprising two secondary amine groups or an amine comprising one primary amine group or a mixture thereof.

6. The polymeric amino (meth)acrylate according to claim 1, wherein the bireactive amine (Aii) is an aliphatic primary amine, preferably a C2-C8 aliphatic primary amine, an amine alcohol or piperazine.

7. The polymeric amino (meth)acrylate according any one of the preceding claims, wherein the difunctional (meth) acrylate (Ai) is preferably an ester of acrylic acid with a two functional polyol wherein the two functional polyol is preferably butanediol, pentanediol, hexanediol, dipropylene glycol, tripropylene glycol, tricyclodecanediol, isosorbide diol.

8. The polymeric amino (meth)acrylate according to any one of the preceding claims, wherein the polymeric amino (meth)acrylate comprises 2 or more, preferably 3 or more, most preferably 4 (meth)acrylate groups or more.

9. The polymeric amino (meth)acrylate according to any one of the preceding claims, wherein the polymeric amino (meth)acrylate has an amine content of at least 1 meq/g, more preferably at least 1.2 meq/g, and wherein the amine content of the polymeric amino (meth)acrylate is calculated as follows:

meq/g N = ((weight bireactive amine Aii/ Mw bireactive amine Aii x number of nitrogen atoms present in compound Aii) / (weight compound B + weight compound Ai + weight compound Aii)*1000.

10. The polymeric amino (meth)acrylate according to any one of the preceding claims, wherein the polymeric amino (meth)acrylate has a double bond content of at least 1 meq/g, more preferably at least 1.5 meq/g, even more preferably 2 meq/g, and wherein the double bond content of the polymeric amino (meth)acrylate is calculated as follows:

Double bond content (meq/g) = (# mole of compound B * (meth)acrylate functionality+# mole of compound Ai * 2 - #mole of compound Aii * NH functionality)/(weight compound B + weight compound Ai + weight compound Aii)*1000.

11. A process for preparing a polymeric amino (meth)acrylate according to any one of the preceding claims comprising the steps of:

   (i) reacting at least one di(meth)acrylated compound (Ai) that comprises two (meth)acrylate groups per molecule with at least one bireactive amine (Aii) to form a secondary amine terminated copolymer (A); and
   (ii) reacting the secondary amine terminated copolymer (A) with at least one multifunctional (meth)acrylate (B) that contains at least two (meth)acrylic ester groups and which is different from the di(meth)acrylated compound (Ai) to obtain the polymeric amino (meth)acrylate.

12. A radiation curable composition comprising the polymeric amino (meth)acrylate according to claims 1-10.

13. The radiation curable composition according to claim 12, which is a radiation curable coating or radiation curable ink.

14. Use of a radiation curable composition according to claim 12 or 13 for offset printing.

15. A substrate coated with a radiation curable composition according to claim 12 or 13.

16. A method for coating an article or substrate comprising the steps of:

   (a) providing a radiation curable composition comprising the polymeric amino (meth)acrylate according to any one of the claims 1-10,
   (b) applying said composition onto a surface, and
   (c) irradiating the surface or article with actinic radiation.

17. Method according to claim 16, wherein the actinic radiation source is a UV LED lamp.

18. A method for improving surface curing in coating and inks comprising the steps of:

   (a) providing a radiation curable composition comprising the polymeric amino (meth)acrylate according to any one of the claims 1-10,

(b) applying said composition onto a surface, and

(c) irradiating the surface or article with actinic radiation.

**Patentansprüche**

1. Polymeres Amino(meth)acrylat, das zur Verwendung in strahlungshärtbaren Zusammensetzungen geeignet ist, wobei das polymere Amino(meth)acrylat das Reaktionsprodukt eines mit einem sekundären Amin terminierten Copolymers (A) oder eines multifunktionellen (Meth)acrylats (B) ist;

   wobei das mit einem sekundären Amin terminierte Copolymer das Reaktionsprodukt eines difunktionellen (Meth)acrylats (Ai) und eines bireaktiven Amins (Aii) ist; und
   wobei das multifunktionelle (Meth)acrylat (B) verschieden ist von dem difunktionellen (Meth)acrylat (Ai) und wobei das multifunktionelle (Meth)acrylat zwei oder mehr (Meth)acrylatgruppen umfasst.

2. Polymeres Amino(meth)acrylat, das zur Verwendung in einer strahlungshärtbaren Zusammensetzung nach Anspruch 1 geeignet ist, wobei das Molverhältnis des multifunktionellen (Meth)acrylats (B) zu dem mit einem sekundären Amin terminierten Copolymer (A) mindestens 2:1 beträgt.

3. Polymeres Amino(meth)acrylat nach Anspruch 1 oder 2, wobei das Molverhältnis des difunktionellen (Meth)acrylats (Ai) bezogen auf das bireaktive Amin (Aii) weniger als 1, vorzugsweise 0,5 bis 0,9 beträgt.

4. Polymeres Amino(meth)acrylat nach einem der vorstehenden Ansprüche, wobei das multifunktionelle (Meth)acrylat (B) 2 oder mehr, vorzugsweise 3 oder mehr, am stärksten bevorzugt 4 (Meth)acrylatgruppen oder mehr umfasst.

5. Polymeres Amino(meth)acrylat nach einem der vorstehenden Ansprüche, wobei das bireaktive Amin (Aii) aus einem Amin, umfassend zwei sekundäre Amingruppen, oder einem Amin, umfassend eine primäre Amingruppe, oder einem Gemisch davon ausgewählt ist.

6. Polymeres Amino(meth)acrylat nach Anspruch 1, wobei das bireaktive Amin (Aii) ein aliphatisches primäres Amin, vorzugsweise ein $C_2$-$C_8$-aliphatisches primäres Amin, ein Aminalkohol oder Piperazin ist.

7. Polymeres Amino(meth)acrylat nach einem der vorstehenden Ansprüche, wobei das difunktionelle (Meth)acrylat (Ai) vorzugsweise ein Ester von Acrylsäure mit einem zweifach funktionellen Polyol ist, wobei das zweifach funktionelle Polyol vorzugsweise Butandiol, Pentandiol, Hexandiol, Dipropylenglycol, Tripropylenglycol, Tricyclodecandiol, Isosorbiddiol ist.

8. Polymeres Amino(meth)acrylat nach einem der vorstehenden Ansprüche, wobei das polymere Amino(meth)acrylat 2 oder mehr, vorzugsweise 3 oder mehr, am stärksten bevorzugt 4 (Meth)acrylatgruppen oder mehr umfasst.

9. Polymeres Amino(meth)acrylat nach einem der vorstehenden Ansprüche, wobei das polymere Amino(meth)acrylat einen Amingehalt von mindestens 1 mÄqu./g, stärker bevorzugt mindestens 1,2 mÄqu./g, aufweist und wobei der Amingehalt des polymeren Amino(meth)acrylats wie folgt berechnet wird:

   mÄqu./g N = ((Gewicht bireaktives Amin Aii / Mw bireaktives Amin Aii x Anzahl an in Verbindung (Aii) vorhandenen Stickstoffatomen / (Gewicht Verbindung B + Gewicht Verbindung Ai + Gewicht Verbindung Aii) x 1.000.

10. Polymeres Amino(meth)acrylat nach einem der vorstehenden Ansprüche, wobei das polymere Amino(meth)acrylat einen Doppelbindungsgehalt von mindestens 1 mÄqu./g, stärker bevorzugt mindestens 1,5 mÄqu./g, noch stärker bevorzugt 2 mÄqu./g, aufweist und wobei der Doppelbindungsgehalt des polymeren Amino(meth)acrylats wie folgt berechnet wird:

Doppelbindungsgehalt (mÄqu./g) = (# Mol von Verbindung B x (Meth)acrylat-Funktionalität + # Mol von Verbindung Ai x 2 - # Mol von Verbindung Aii x NH-Funktionalität) / (Gewicht Verbindung B + Gewicht Verbindung Ai + Gewicht Verbindung Aii) x 1.000.

11. Verfahren zur Herstellung eines polymeren Amino(meth)acrylats nach einem der vorstehenden Ansprüche, umfassend die folgenden Schritte:

(i) Umsetzen mindestens einer di(meth)acrylierten Verbindung (Ai), die zwei (Meth)acrylatgruppen pro Molekül umfasst, mit mindestens einem bireaktiven Amin (Aii) unter Bildung eines mit einem sekundären Amin terminierten Copolymers (A); und

(ii) Umsetzen des mit einem sekundären Amin terminierten Copolymers (A) mit mindestens einem multifunktionellen (Meth)acrylat (B), das mindestens zwei (Meth)acrylsäureestergruppen enthält und das von der di(meth)acrylierten Verbindung (Ai) verschieden ist, unter Erhalt des polymeren Amino(meth)acrylats.

12. Strahlungshärtbare Zusammensetzung, umfassend das polymere Amino(meth)acrylat nach den Ansprüchen 1 - 10.

13. Strahlungshärtbare Zusammensetzung nach Anspruch 12, die eine strahlungshärtbare Beschichtung oder strahlungshärtbare Tinte ist.

14. Verwendung einer strahlungshärtbaren Zusammensetzung nach Anspruch 12 oder 13 für Offsetdruck.

15. Substrat, das mit einer strahlungshärtbaren Zusammensetzung nach Anspruch 12 oder 13 beschichtet ist.

16. Verfahren zum Beschichten eines Gegenstands oder Substrats, umfassend die folgenden Schritte:

(a) Bereitstellen einer strahlungshärtbaren Zusammensetzung, umfassend das polymere Amino(meth)acrylat nach einem der Ansprüche 1 - 10,

(b) Aufbringen der Zusammensetzung auf eine Oberfläche und

(c) Bestrahlen der Oberfläche oder des Gegenstandes mit aktinischer Strahlung.

17. Verfahren nach Anspruch 16, wobei die Quelle für aktinische Strahlung eine UV-LED-Lampe ist.

18. Verfahren zum Verbessern der Oberflächenhärtung bei Beschichtungen oder Tinten, umfassend die folgenden Schritte:

(a) Bereitstellen einer strahlungshärtbaren Zusammensetzung, umfassend das polymere Amino(meth)acrylat nach einem der Ansprüche 1 - 10,

(b) Aufbringen der Zusammensetzung auf eine Oberfläche und

(c) Bestrahlen der Oberfläche oder des Gegenstandes mit aktinischer Strahlung.

**Revendications**

1. Amino (méth)acrylate polymérique approprié pour une utilisation dans des compositions durcissables par un rayonnement, ledit amino (méth)acrylate polymérique étant le produit de réaction d'un copolymère (A) terminé par une amine secondaire et d'un (méth)acrylate multifonctionnel (B) ;

ledit copolymère terminé par une amine secondaire étant le produit de réaction d'un (méth)acrylate difonctionnel (Ai) et d'une amine biréactive (Aii) ; et

le (méth)acrylate multifonctionnel (B) étant différent du (méth)acrylate difonctionnel (Ai) et lequel (méth)acrylate multifonctionnel comprenant deux groupes (méth)acrylate ou plus.

2. Amino (méth)acrylate polymérique approprié pour une utilisation dans des compositions durcissables par un rayonnement selon la revendication 1, le rapport molaire du (méth)acrylate multifonctionnel (B) sur le copolymère (A) terminé par une amine secondaire étant d'au moins 2 : 1.

**3.** Amino (méth)acrylate polymérique selon la revendication 1 ou 2, le rapport molaire de (méth)acrylate difonctionnel (Ai) sur l'amine biréactive (Aii) étant inférieur à 1, préférablement de 0,5 à 0,9.

**4.** Amino (méth)acrylate polymérique selon l'une quelconque des revendications précédentes, le (méth)acrylate multifonctionnel (B) comprenant 2 ou plus, préférablement 3 ou plus, le plus préférablement 4 groupes (méth)acrylate ou plus.

**5.** Amino (méth)acrylate polymérique selon l'une quelconque des revendications précédentes, l'amine biréactive (Aii) étant choisie parmi une amine comprenant deux groupes amine secondaire ou une amine comprenant un groupe amine primaire ou un mélange correspondant.

**6.** Amino (méth)acrylate polymérique selon la revendication 1, l'amine biréactive (Aii) étant une amine primaire aliphatique, préférablement une amine primaire aliphatique en C2-C8, un aminoalcool ou une pipérazine.

**7.** Amino (méth)acrylate polymérique selon l'une quelconque des revendications précédentes, le (méth)acrylate difonctionnel (Ai) étant préférablement un ester d'acide acrylique avec un polyol bifonctionnel, le polyol bifonctionnel étant préférablement le butanediol, le pentanediol, l'hexanediol, le dipropylèneglycol, le tripropylèneglycol, le tricyclodécanediol ou un isosorbide diol.

**8.** Amino (méth)acrylate polymérique selon l'une quelconque des revendications précédentes, l'amino (méth)acrylate polymérique comprenant 2 ou plus, préférablement 3 ou plus, le plus préférablement 4 groupes (méth)acrylate ou plus.

**9.** Amino (méth)acrylate polymérique selon l'une quelconque des revendications précédentes, l'amino (méth)acrylate polymérique ayant une teneur en amine d'au moins 1 méq/g, préférablement d'au moins 1,2 méq/g, et la teneur en amine de l'amino (méth)acrylate polymérique étant calculée comme suit :

```
méq/g N = ((poids d'amine biréactive Aii/Mw d'amine
biréactive Aii x nombre d'atomes d'azote présents
dans le composé Aii)/(poids du composé B + poids du
composé Ai + poids du composé Aii)*1 000.
```

**10.** Amino (méth)acrylate polymérique selon l'une quelconque des revendications précédentes, l'amino (méth)acrylate polymérique ayant une teneur en doubles liaisons d'au moins 1 méq/g, préférablement d'au moins 1,5 méq/g, encore plus préférablement d'au moins 2 méq/g, et la teneur en doubles liaisons de l'amino (méth)acrylate polymérique étant calculée comme suit :

```
teneur en doubles liaisons (méq/g) = (# moles de
composé B * fonctionnalité de (méth)acrylate + #
moles de composé Ai * 2 - # moles de composé Aii *
fonctionnalité de NH)/(poids du composé B + poids
du composé Ai + poids du composé Aii)*1 000.
```

**11.** Procédé pour la préparation d'un amino (méth)acrylate polymérique selon l'une quelconque des revendications précédentes comprenant les étapes de :

(i) mise en réaction d'au moins un composé di(méth)acrylé (Ai) qui comprend deux groupes (méth)acrylate par molécule avec au moins une amine biréactive (Aii) pour former un copolymère (A) terminé par une amine secondaire ; et
(ii) mise en réaction du copolymère (A) terminé par une amine secondaire avec au moins un (méth)acrylate multifonctionnel (B) qui contient au moins deux groupes ester (méth)acrylique et qui est différent du composé di(méth)acrylé (Ai) pour obtenir l'amino (méth)acrylate polymérique.

**12.** Composition durcissable par un rayonnement comprenant l'amino (méth)acrylate polymérique selon les revendications 1 à 10.

**13.** Composition durcissable par un rayonnement selon la revendication 12, qui est un revêtement durcissable par un rayonnement ou une encre durcissable par un rayonnement.

**14.** Utilisation d'une composition durcissable par un rayonnement selon la revendication 12 ou 13 pour une impression offset.

**15.** Substrat revêtu par une composition durcissable par un rayonnement selon la revendication 12 ou 13.

**16.** Procédé pour le revêtement d'un article ou d'un substrat comprenant les étapes de :

(a) fourniture d'une composition durcissable par un rayonnement comprenant l'amino (méth)acrylate polymérique selon l'une quelconque des revendications 1 à 10,
(b) application de ladite composition sur une surface, et
(c) irradiation de la surface ou de l'article avec un rayonnement actinique.

**17.** Procédé selon la revendication 16, la source de rayonnement actinique étant une lampe LED UV.

**18.** Procédé pour l'amélioration du durcissement en surface dans un revêtement et des encres comprenant les étapes de :

(a) fourniture d'une composition durcissable par un rayonnement comprenant l'amino (méth)acrylate polymérique selon l'une quelconque des revendications 1 à 10,
(b) application de ladite composition sur une surface, et
(c) irradiation de la surface ou de l'article avec un rayonnement actinique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007017298 A
- US 20100048756 A
- EP 1731541 A
- WO 06131259 A
- WO 2017095786 A1
- EP 3401370 A1

**Non-patent literature cited in the description**

- **P. J. FLORY.** *J. Am. Chem. Soc.,* 1936, vol. 58, 1877
- *J. Am. Chem. Soc.,* 1953, vol. 63, 3083
- The Chemistry of Free Radical Polymerization. Pergamon, 1995, 84-89